# EUROPEAN PATENT SPECIFICATION

(11) **EP 2 053 736 B1**
(45) Date of publication and mention of the grant of the patent: **22.05.2019**
(21) Application number: 08015758.9
(22) Date of filing: 08.09.2008
(51) Int. Cl.: H02P 6/08, H02P 25/024, H02P 21/34, D01H 13/10, B65H 59/38, D04B 15/48

(54) **Control method for positive yarn feeders**
Steuerverfahren für positive Garnzuführer
Procédé de contrôle pour passe-fils positifs

(30) Priority: 26.10.2007 IT TO20070767
(43) Date of publication of application: 29.04.2009
(73) Proprietor: Elsy S.r.l., 24024 Gandino (BG) (IT)
(72) Inventor: Gotti, Andrea, 24024 Albino (BG) (IT); Ruggeri, Mirko, 24026 Leffe (IT)
(74) Representative: Modiano, Micaela Nadia

(56) References cited:
- EP-A1- 1 536 552
- EP-A1- 1 612 927
- EP-A1- 1 710 334
- EP-A1- 1 837 724
- US-A- 6 002 230
- US-A1- 2003 020 432
- ZHANG J: "Speed sensorless AC drive fed by a 3-level inverter with improved low-speed torque and speed control", INDUSTRIAL ELECTRONICS, CONTROL, AND INSTRUMENTATION, 1996., PROCEEDIN GS OF THE 1996 IEEE IECON 22ND INTERNATIONAL CONFERENCE ON TAIPEI, TAIWAN 5-10 AUG. 1996, NEW YORK, NY, USA,IEEE, US, vol. 2, 5 August 1996 (1996-08-05), pages 1128-1133, XP010203534, DOI: 10.1109/IECON.1996.566037 ISBN: 978-0-7803-2775-7

## Description

The present invention relates to a method for controlling the motion of a positive yarn feeder for textile machines and the like, which particularly is provided with a motor controlled by voltage or by current.

The above yarn feeders draw the yarn from a reel under a controlled speed and a controlled tension and deliver it to a machine such as a textile loom, a knitting machine, a spooler, and the like. The feeder comprises a motor which drives a yarn-winding drum having a variable number of yarn loops wound thereon. The motor is driven by an electronic power unit consisting of a bridge of electronic switches controlled by a control unit, which processes signals from external sensors such as, e.g., a yarn tension signal, the voltage signals and/or the current signals deriving from the driving of the motor, the feedback signals from any speed/position sensor of the motor, etc. On the basis of such signals, the control unit cyclically closes the switches of the electronic power supply unit in order to control the speed of the motor and consequently the speed of the yarn which, of course, is proportional to the speed of the motor. Such control units are substantially capable of operating in real time by means of circuits which implement voltage/current, nested control loops by speed and by position.

As known to the person skilled in the art, a "positive yarn feeder" is intended as a yarn feeder in which the yarn-winding drum rotates together with the motor and the yarn is drawn "a déroulé", in contrast with the negative yarn feeders in which the yarn-winding drum is stationary while the yarn is drawn "a défilé" and is wound by a flywheel that rotates together with the motor.

The known positive yarn feeders make use of stepping motors or, more advantageously, brushless motors, which are more suitable to applications in which high speeds/accelerations are involved.

Apart from the type of motor, speed sensors and/or position sensors are desirable in a positive yarn feeder in order to control the tension and the speed of the yarn. In particular, when a synchronous motor (possibly with permanent magnets) is used, the instant position of the rotor must be known in order to implement the known controlling techniques for synchronous motors.

In the control of motors by speed/position, it is known both to obtain the instantant position of the rotor by dedicated sensors, and to estimate the position by so-called "sensorless" techniques in which voltages and phase currents of the motor are measured, but the instantaneous position can also be predetermined starting from the profile of motion which the motor is desired to follow. As described below, the latter technique is used in the present invention.

The sensorless, vectorial control of sinusoidal brushless motors is known from US 4,814,677. This sophisticated control technique, however, is difficult to apply to the present application due to the highly dynamic transients to which the motor is subjected. In fact, the non-knowledge or inaccurate knowledge of the position of the rotor at rest causes unsteady reactions to the transients of torque and load and, consequently, causes inaccuracies in the yarn-feeding process.

It is known from EP 1,052,766 to use permanent magnet, synchronous motors in negative yarn feeders, which motors have a trapezoidal, counter-electromotive force and a trapeizodal control (BLDC) based on detecting the zero-crossing of a counter-electromotive phase force. As known to the person skilled in the art, the repeated transients of armature current which affect the BLDC generate a current ripple, and consequently a torque ripple proportional to the angular speed of the motor. This circumstance is tolerable in negative yarn feeders, but is in contrast with the high accuracy required for the yarn-feeding process in the positive yarn feeders, even with very high angular speeds. This sensorless control technique based on detecting the zero-crossing of a counter-electromotive force is also penalizing in that the estimate of the angular position is not very accurate at low speeds and is not appliable with the motor at rest. This is in contrast with the need for a quick start of the motor in positive yarn feeders, even with a standing start, and the need for high, though regular, angular accelerations, in order to avoid inaccuracies in the yarn-feeding process.

It is known from patent application WO2005/080654 to use position sensors in positive yarn feeders, in which the ratio between the angular resolution of the sensor, s [step/revolution], and the diameter of the drum, d [mm], is higher than s/d = 3 mm⁻¹. This solution makes it easier to control the feeder but is expensive because it requires a precision sensor; this sensor, furthermore, comprises mechanical elements which rotate integrally with the rotor and with the yarn-winding drum, with a high percent increase of the whole moment of inertia, so that the required dynamism of motion is affected.

Positive yarn feeders are known, which make use of sinusoidal, three-phase brushless motors (with sinusoidal distribution of the counter-electromotive forces) which are controlled by the simple trapezoidal technology. The electrical position of the rotor is obtained by three, well known digital Hall sensors housed within the motor. Of course, such Hall sensors are less expensive than the precision sensor claimed in patent application WO2005/080654, but they only have a resolution of 6 angular positions per electrical revolution, or 6n relative angular positions per mechanical revolution, wherein n is the number of pole shoes of the motor. The low resolution of the angular information provided by the Hall sensors precludes the sinusoidal control of this brushless motor, which is sinusoidal per se and consequently would be particularly suitable to this type of control. The sinusoidal control would give a series of advantages in terms of performance, which derive from the absence of torque ripple of the motor, with consequent punctual and accurate feeding of the yarn; it would also enhance the ratio between the driving torque and the current rms drawn, with consequent low dissipation of power, thereby preventing the motor from overheating.

As known, the digital Hall sensors provide one absolute, electrical angular position, but, unless the motor has only one pole shoe, they only provide one relative mechanical position.

This can limit the negative yarn feeders because, e.g., an information about the absolute, mechanical position can be used to implement the automatic or semiautomatic insertion of the weft yarn (e.g.: WO03029121, which also uses the sensorless, vectorial control to this purpose). However, this feature is useless in the positive yarn feeders, which have a yarn-winding drum without insertion eyelets and, consequently, are well suitable to be controlled by speed or by relative mechanical position at the most, of which the absolute electrical position is one example.

US2003/0020432 A1 discloses an inverter apparatus for variably controlling the speed of an induction motor by means of a method according to the preamble of claim 1. In particular, the motor is controlled instant-by instant as a function of a reference position of the rotor. The reference position of the rotor is calculated by integrating a reference speed value, thereby deriving an angular parameter for the three-phase, electrical excitation of the motor. However, US2003/0020432 A1 does not disclose any solution for preventing a well known problem of the stepper motors, i.e., the falling out of step.

It is known from EP1837724 to apply a sinusoidal control to sinusoidal brushless motors equipped with digital Hall sensors, in positive yarn feeders. This solution implements a sophisticated control at low cost, which produces fluid movements and high silentness of the motor, because there is no torque ripple.

With this control method, the frequency under which the angular speed is measured is proportional to the instant speed of the motor. As well known to the person skilled in the art in view of considerations regarding the stability of the control systems based on closed loops, this circumstance intrinsecally limits the performance at low speed: in fact, below a critical speed depending on the mechanical load and on the gain of the speed loop, the lower the speed, the more unsure and the more irregular the movement of the motor.

With the solution of the invention, the sinusoidal control is still applied to a sinusoidal brushless motor for a positive yarn feeder, and the three digital Hall sensors, which are usual in case of trapezoidal control, are still used as position sensors. With respect to the above EP1837724, however, the new sinusoidal control is not based on an angular position which is measured starting from the signals of the digital Hall sensors, but on a position which is calculated a priori starting from a speed reference which is to be followed. This approach allows the intrinsic limits at low speed of the control method of EP1837724 to be overcome and, in any case, does not require accurate, expensive position sensors (WO2005/080654), because a cheap, though accurate, algorithm for predicting the angular position is used.

In order to understand the operation of the present control method and to point out the differences with respect to the method described in EP1837724, reference can be made to the vectorial model of a synchronous, rotating electric machine. Of course, this choice is not mandatory, in fact the present control method can easily be applied outside the vectorial control of brushless motors, but allows an accurate, though synthetic, disclosure.

The easy trapezoidal control of sinusoidal brushless motors, as well as the control described in EP1837724, are liable to maximize the torque delivered by the motor for equal current drawn.

In the vectorial model of a brushless motor, this corresponds to a current equal to zero along the direct axis, Isd, and to a current different from zero (generally equal or very close to a reference value determined by speed/position control loops in which the voltage control loop and/or current control loop is nested) along the quadrature axis, Isq.

Now, if a three-phase synchronous motor is assumed to be supplied by a triad of constant voltages whose values are equal to those of three sinusoids shifted out of phase of 120°, the motor in a steady state is liable to draw three phase currents, which also are constant and form a three-phase triad. It is evident that the magnetic field of the stator, that is generated by the three phase currents, interacts with the magnetic field of the rotor, that is generated by the permanent magnets in the case of a brushless motor, thereby generating a driving torque. This driving torque starts up the rotor, which, if not already aligned to the stator magnetic field, is liable to fall into line therewith and than to keep its balance in this position.

This phenomenon, in which the rotor fall into line with the stator magnetic field, is defined by the following steady state conditions of the currents, respectively along the axes D and Q: Isd different from zero and Isq equal to zero. That is the same as saying that the current delivered to the motor in a steady state does not produce any driving torque, which circumstance, of course, affects the efficiency and the dissipation of power, but generates a return torque when the rotor is liable to come out of alignment from the stator magnetic field.

Now, if three new values are assigned to the three-phase voltages applied to the motor, the stator magnetic field moves of a certain angle. This generates a transitory condition in which Isq is different from zero, with rising of a new driving torque which, in its turn, is liable to align the rotor again to the new position of the stator magnetic field.

Finally, if the motor is driven by a system of three-phase voltages which describes an angular position growing over time, it is possible to produce a continuous rotation of the rotor, which is regular, fluid and noiseless even at low speeds. It is evident that, depending on the amplitude of the triad of voltages applied to the motor, as well as on the features of the mechanical load, the current drawn by the motor may change even at constant speed (because of the changes of the load angle of the motor); in any case, the condition of the current which distinguishes the present method from the method of EP1837724 is: average Isd different from zero. This technique, as known, is used in the control of so-called "stepper" motors.

The above method, which has the aim of overcoming the limits of the control technique described in EP1837724 at low speed, may be alternatively used below a treshold speed. The advantages achieved by this solution are as follows:
_improving the motion control system at low speed with sinusoidal voltage control, sinusoidal current control, or even vectorial current control of the motor.
_improving the dynamics of the motion control system during the resting/running and running/resting transients.
_maximizing the deliverable torque at low speeds and even at rest.
_improving the yarn tension control system at low speed, i.e., without jerks and consequent yarn tension peaks, thereby enhancing the quality of the resulting fabric/hosiery.

In short, the proposed solution allows the above funtions, which are designed for controlling a brushless motor for yarn feeders by voltage, by current, by speed and by position, to be implemented at a software level, at low cost and with a ratio performance/cost which, nowadays, seems difficult to be achieved in other ways.

It is a main object of the invention to provide a positive yarn feeder for textile machines and the like, in which the control of the yarn is more accurate and more uniform than in the known feeders, mainly at low speeds.

It is another object to provide a positive yarn feeder in which the torque ripple in the motor which operates the yarn-winding drum is absent or reduced, even at low speeds.

It is a further object of the invention to provide a yarn feeder as above which is equipped with accurate, though unexpensive, sensors and software for predicting the speed and the angular position.

The above objects are achieved by the invention, together with other aims and advantages which will become apparent from the following description, with a method for controlling the motion of a positive yarn feeder having the features recited in claim 1, while other advantageous features are stated in the dependent claims.

A preferred embodiment of the invention will be now described with reference to the attached drawings, wherein:
Fig. 1 is a general diagram of a positive yarn feeder of a type which the invention is referred to.
Fig. 2 represents the field angle used when the motor is piloted at a constant speed.
Fig. 3 represents the three-phase triad, by voltage or by current, which is used when the motor is piloted at a constant speed.
Fig. 4 represents the field angle and the three-phase triad, by tension or by current, which is used when the motor is piloted during a change of speed.
Fig. 5 is a block diagram of the vectorial control by current of a brushless motor as described in EP1837724.
Fig. 6 is the block diagram of the vectorial control by current of a brushless motor implemented according to the invention, which is based on a preventive calculation of the field angle starting from the reference angular speed of the motor.
Fig. 7 is a time diagram that illustrates the operation of an algorithm of decision according to the invention, which prevents the motor from falling out of step and, therfore, allows it to be piloted more dynamically and more effectively.

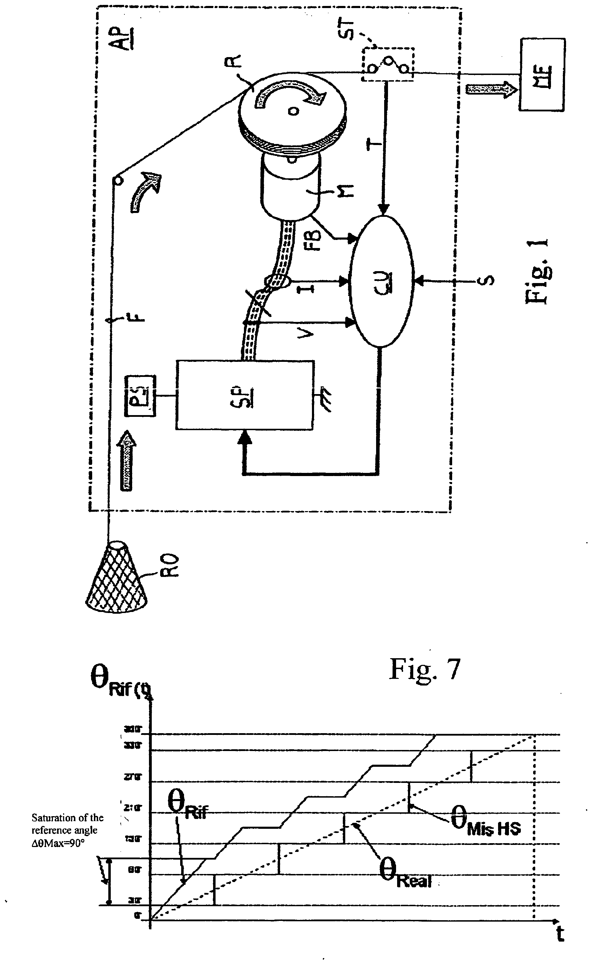

In Fig. 1, a positive yarn feeder AP draws yarn F from a yarn reel RO and feeds it to a user machine MF, such as a textile loom, a knitting machine, a spooler, and the like, under a controlled tension and a controlled speed. Yarn F from reel RO is wound in the shape of a plurality of loops around a drum R that is keyed to the shaft of a motor M, and passes through an electronic tension sensor ST before reaching machine MF.

Motor M is a brushless motor (synchronous with permanent magnets) supplied by a power source PS via a three-phase switching bridge SP made of electronic switches. Control unit CU receives a tension signal T concerning yarn F from sensor ST, voltage signals V and phase current signals I deriving from the driving of the motor, signals FB from any further sensor with which the motor is equipped (e.g., speed sensors or position sensors), any other signal S from the outside; and provides a sequence of commands that pilot bridge SP, thereby obtaining the desired curve of speed and tension for the yarn.

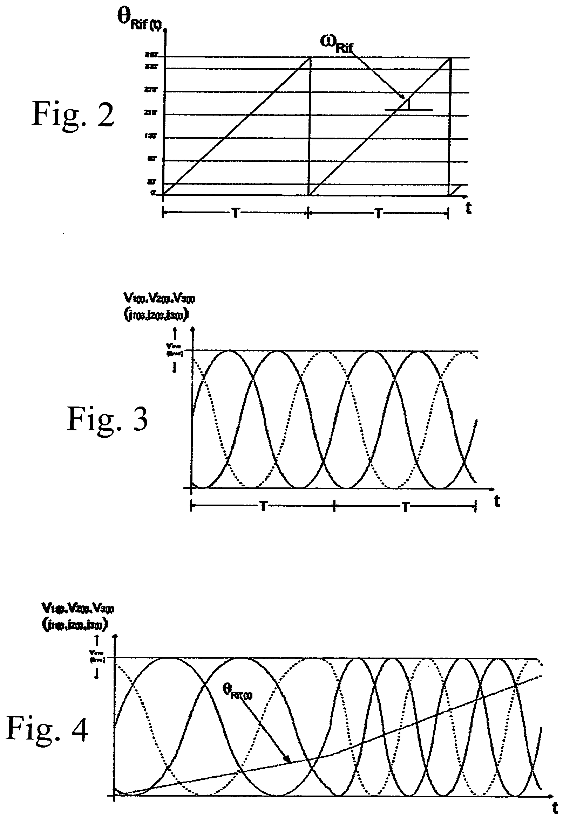

Fig. 2 illustrates the periodical curve of the reference angle θrif over time, which is used for the control by voltage, by tension, or for the vectorial control by current of the motor. In particular, it is evident that θrif has linear spans and, during each period T, has an increment from 0 to 360°. For the sake of more simplicity, the angular speed, ωrif, which in this conditions can only be constant, is pointed out in one point.

Fig. 3 illustrates a possible curve of the three-phase triad which controls the motor, corresponding to an operation at constant speed. The piloting triad may be either by voltage, V₁(t), V₂(t) e V₃(t), or by current, i₁(t), i₂(t) e i₃(t), depending on using a control method by voltage or (vectorial) by current respectively. Finally, it should be pointed out that the amplitudes of the three-phase triads, V_{MAX} e I_{MAX}, may assume different values, e.g., depending on the angular speed of the motor and of the driving torque required thereto.

For the sake of more simplicity, Fig. 4 illustrates the curve of both the reference angle and the piloting three-phase triad by voltage or by current, during a change of speed. In particular, the response to a positive step of angular speed is represented.

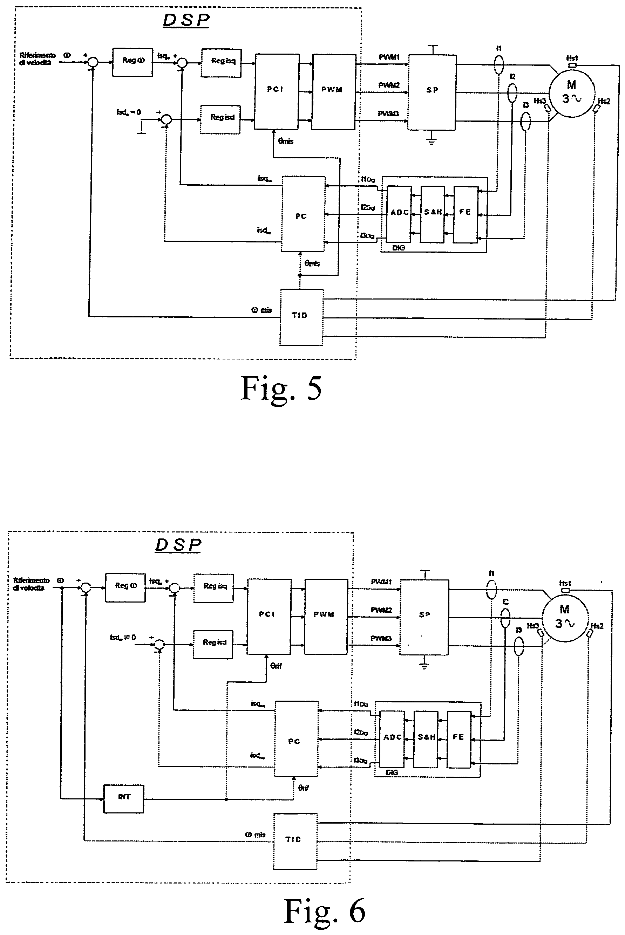

In Fig. 5, a micro-controller or Digital Signal Processor, DSP, provides a triad of modulated sinusoidal digital signals PWM, PWM1, 2 and 3, for driving three-phase bridge of electronic switches, SP. This three-phase bridge (inverter) supplies brushless motor M with the required voltages and currents, which motor supports three digital Hall sensors, HS1, 2 and 3. The signals from this triad of sensors pilot an algorithm, TID, which operates as a Digital Tachometer and Interpolator and is implemented in DSP according to the teachings of EP1837724; it provides digital signals relating to the measured speed, ωmis, and to the measured position, θmis.

A triad of electronic sensors measures the phase currents drawn by the motor, 11, 12 and 13. A Front End circuit, FE, receives such signals and processes them according to the processing criteria for analog signals, e.g., by filtering, amplifying, attenuating, shifting their level, etc. A block S&H downstream of FE performs the sampling and holding of the signals obtained as above, as required for the analog-to-digital convertion implemented by the subsequent converter ADC. The group of blocks FE, S&H and ADC forms the digitalizer, DIG, whose output delivers digitalized current signals I_{1Dig}, I_{2Dig} e I_{3Dig}.

An algorithm referred to as PC, performs the Clarke transformation and Park transformation of the statoric currents according to known techniques. Starting from signals I_{1Dig}, I_{2Dig} and I_{3Dig} and θmis, it delivers their components along the direct axis and the quadrature axis, Isdₘᵢₛ and Isqₘᵢₛ. The so-obtained two signals are each compared in a subtracter node with the respective reference signal, Isd_{rif} and Isqrif, which are respectively equal to zero and equal to a value which is generally different from zero and, e.g., is determined by an outer speed control loop. Such control loop is represented by the speed reference, ωrif, by the measured speed, ωmis, and by the speed regulator Regω.

The two current regulation errors, i.e., the differences between the reference and the measurement along axes D and Q, are each sent to a regulator, Reglsd and RegIsq, which implements the compensation of the respective current control loop. The outputs of the two regulators and the measured angle θmis are then sent to a block referred to as PCI, which implements the Park transformation and the Clarke transformation and, consequently, generates the three sinusoidal digital signals for piloting the subsequent modulator PWM that finally generates signals PWM1, 2 and 3, from which the description of Fig. 5 has started.

Fig. 6 is a block diagram of the innovative control method according to the present invention. In particular, the differences from the control method known from EP1837724 are pointed out: in this case the reference current along axis D is generally different from zero, while in EP1837724 it is always equal to zero, and the piloting angle is not the angle measured by block TID like in EP1837724, but it is calculated by an algorithm, INT, which performs the numerical integration of the reference angular speed, ωrif. In facts, the phisical meaning of the integration of the reference angular speed is the reference piloting angle of the motor.

It should be pointed out that, for equal speed of rotation, when Isd_{rif} changes, the load angle and the driving torque of the rotor also change: the higher Isd, the higher the driving torque of the motor; the higher Isd, the lower the load angle.

In Fig. 7, a time diagram illustrates the operation of an improved, motion-controlling algorithm introduced herewith.

A problem affecting the stepper motors, which are usually piloted without using any position sensor, is that they fall out of step. In facts, when abrupt accelerations/decelerations are required, the rotor is not able to follow the desired piloting angle. This causes uncertainities of motion and fluctuations of the load, which, in case of positive yarn feeders, could generate peaks of tension on the yarn or, even worse, the breaking of the yarn.

The algorithm of the invention prevents the falling out of step by comparing the piloting angle calculated by integration of the reference angular speed, θrif, with a coarse angle calculated by instantaneous combination of the three Hall sensors, θmisHS. In particular, Fig. 7 relates to an operation at constant speed, where the curve of the angular position of the rotor, θreal, is a slope, the curve of the coarse angular position calculated on the basis of the digital Hall sensors, θmisHS, is a stepping slope that is quantized each 60°, and the reference angle is a slope saturated at intervals, whose average slope is equal to the slope of θreal. The present algorithm prevents the falling out of step when, e.g., due to an eccessive loading torque, the reference angle θrif is liable to misalign from the coarse angle θmisHS of an amount higher than 90°; in this case, θrif is saturated at θmisHS + 90°, so that the falling out of step is prevented and the highest transmission of torque is achieved. Of course, during braking, the saturation treshold of θrif is θmisHS - 90°.

A preferred embodiment of the invention has been described herein, but of course many changes are possible within the scope of the inventive concept. Therefore, although in the preferred embodiment the motor is controlled by current in a vectorial way,it is possible to use easier, though less effective, non-vectorial sinusoidal controls by tension or by current. Moreover, the above-described method could only be used below a predetermined treshold of angular speed, while above that treshold known control methods could be used, such as a trapezoidal control or the control known from EP1837724.

It should also be noted that the control method of the invention is particularly suitable to control a brushless synchronous motor with permanent magnets, in which the stator consists of a hollow cylindrical housing having a plurality of elongated pole shoes with excitations coils wound thereon, and the rotor comprises a magnetic member having a circular profile and alternated poles. A motor of this type is described in EP1710334, to which reference should be made for more details.

## Claims

1. A motion control method for a positive yarn feeder for textile machines, said positive yarn feeder being provided with a yarn-winding drum (R) driven by a rotor of a three-phase synchronous motor of a sinusoidal type (M), under a controlled speed, for feeding a yarn (F) from a reel (RO) to a user machine (MF) under a desired tension, which method comprises the step of controlling said three-phase synchronous motor instant-by instant as a function of a reference position of the rotor, said reference position of the rotor (θrif) being calculated by integrating (INT) a reference speed value (ωrif) and an angular parameter for the three-phase, electrical excitation of said three-phase synchronous motor being thereby derived, **characterized in that** the reference position of the rotor, which is calculated by integrating the reference speed value (ωrif), is compared with a coarse angle (θmisHS) deriving from the instantaneous combination of three digital position sensors applied to the rotor of said three-phase synchronous motor (M), and the reference position of the rotor (θrif) is saturated if the reference position of the rotor (θrif) misaligns from the coarse angle (θmisHS) by an amount higher than 90°.

2. The control method of claim 1, **characterized in that** said angular parameter is the phase angle of the excitation three-phase voltage.

3. The control method of claim 1, **characterized in that** said angular parameter is the phase angle of the excitation three-phase current.

4. The control method of claim 3, **characterized in that**, for obtaining said angular parameter, the direct component and the quadrature component of an estimated three-phase current (Isdₘᵢₛ, Isqₘᵢₛ) are derived from said reference position of the rotor, and respective regulation components are calculated from them by difference from respective direct component and quadrature component of a reference current (Isd_{rif}, Isq_{rif}).

5. The control method of claim 1, **characterized in that** said digital position sensors are Hall sensors.

6. The control method of any of the above claims, **characterized in that** said synchronous motor is a brushless motor.

7. The control method of claim 6, **characterized in that** said brushless motor is a permanent magnet motor whose stator consists of a hollow cylindrical housing having a plurality of elongated pole shoes with excitations coils wound thereon, and the rotor comprises a magnetic member having a circular profile and alternated poles.

8. The control method of any of the above claims, **characterized in that** the method is used below a predetermined threshold of angular speed of said rotor, while above said treshold another known control method as desired is used.

## Patentansprüche

1. Ein Bewegungssteuerverfahren für einen positiven Garnzuführer für Textilmaschinen, wobei der positive Garnzuführer mit einer Garnabwickeltrommel (R) ausgestattet ist, die mit gesteuerter Geschwindigkeit von einem Rotor eines Drehstrom-Synchronmotors vom Sinustyp (M) angetrieben wird, um einen Faden (F) von einer Spule (RO) mit gewünschter Spannung einer Nutzermaschine (MF) zuzuführen, wobei das Verfahren den Schritt des Steuerns des Drehstrom-Synchronmotors Zeitpunkt für Zeitpunkt als Funktion einer Referenzposition des Rotors umfasst, wobei die Referenzposition des Rotors (θrif) berechnet wird durch Integrieren (INT) eines Referenzgeschwindigkeitswerts (ωrif) und eines Winkelparameters für die drei Phasen, wodurch die elektrische Erregung des Drehstrom-Synchronmotors erzielt wird, **dadurch gekennzeichnet, dass** die Referenzposition des Rotors, die durch Integration des Referenzgeschwindigkeitswerts (ωrif) berechnet wird, mit einem groben Winkel (θmisHS) verglichen wird, abgeleitet von der unmittelbaren Kombination dreier digitaler Positionssensoren, die an den Rotor des Drehstrom-Synchronmotors (M) angelegt sind, und die Referenzposition des Rotors (θrif) gesättigt ist, wenn die Referenzposition des Rotors (θrif) vom groben Winkel (θmisHS) um mehr als 90° abweicht.

2. Das Steuerverfahren gemäß Anspruch 1, **dadurch gekennzeichnet, dass** der Winkelparameter der Phasenwinkel der Drehstrom-Erregerspannung ist.

3. Das Steuerverfahren gemäß Anspruch 1, **dadurch gekennzeichnet, dass** der Winkelparameter der Phasenwinkel des Drehstrom-Erregerstroms ist.

4. Das Steuerverfahren gemäß Anspruch 3, **dadurch gekennzeichnet, dass** zum Gewinnen des Winkelparameters die Direktkomponente und die Blindkomponente eines geschätzten Drehstroms (Isdₘᵢₛ, Isqₘᵢₛ) von der Referenzposition des Rotors abgeleitet werden und entsprechende Regelungskomponenten davon aus der Differenz zwischen der entsprechenden Direktkomponente und der Blindkomponente eines Referenzstroms (Isd_{rif}, Isq_{rif}) berechnet werden.

5. Das Steuerverfahren gemäß Anspruch 1, **dadurch gekennzeichnet, dass** die digitalen Positionssensoren Hall-Sensoren sind.

6. Das Steuerverfahren gemäß einem beliebigen der obigen Ansprüche, **dadurch gekennzeichnet, dass** der Synchronmotor ein bürstenloser Motor ist.

7. Das Steuerverfahren gemäß Anspruch 6, **dadurch gekennzeichnet, dass** der bürstenlose Motor ein Dauermagnetmotor ist, dessen Stator aus einem hohlen zylindrischen Gehäuse besteht, das eine Vielzahl länglicher Polschuhe mit darauf gewundenen Erregerspulen hat, und der Rotor ein Magnetglied mit kreisförmigem Profil und Polen mit wechselnden Vorzeichen hat.

8. Das Steuerverfahren gemäß einem beliebigen der obigen Ansprüche, **dadurch gekennzeichnet, dass** das Verfahren unterhalb eines vordefinierten Schwellenwerts der Winkelgeschwindigkeit des Rotors angewandt wird, während oberhalb des Schwellenwerts je nach Bedarf ein anderes bekanntes Steuerverfahren genutzt wird.

## Revendications

1. Procédé de commande de mouvement pour un dispositif d'alimentation positive de fil pour des machines à textile, ledit dispositif d'alimentation positive de fil étant pourvu d'un tambour de dévidage de fil (R) entraîné par un rotor d'un moteur synchrone triphasé d'un type sinusoïdal (M), sous une vitesse commandée, pour acheminer un fil (F) d'un dévidoir (RO) à une machine utilisatrice (MF) sous une tension voulue, lequel procédé comporte l'étape consistant à commander ledit moteur synchrone triphasé instant par instant en fonction d'une position de référence du rotor, ladite position de référence du rotor (θrif) étant calculée en intégrant (INT) une valeur de vitesse de référence (ωrif) et un paramètre angulaire pour l'excitation électrique triphasée dudit moteur synchrone triphasé étant ainsi dérivé, **caractérisé en ce que** la position de référence du rotor, qui est calculée en intégrant la valeur de vitesse de référence (ωrif), est comparée à un angle approximatif (θmisHS) dérivant de la combinaison instantanée de trois capteurs de position numériques appliqués au rotor dudit moteur synchrone triphasé (M), et la position de référence du rotor (θrif) est saturée si la position de référence du rotor (θrif) se désaligne de l'angle approximatif (θmisHS) d'une grandeur supérieure à 90°.

2. Procédé de commande selon la revendication 1, **caractérisé en ce que** ledit paramètre angulaire est l'angle de phase de la tension d'excitation triphasée.

3. Procédé de commande selon la revendication 1, **caractérisé en ce que** ledit paramètre angulaire est l'angle de phase du courant d'excitation triphasé.

4. Procédé de commande selon la revendication 3, **caractérisé en ce que**, pour obtenir ledit paramètre angulaire, la composante continue et la composante en quadrature d'un courant triphasé estimé (Isdₘᵢₛ, Isqₘᵢₛ) sont dérivées de ladite position de référence du rotor, et des composantes de régulation respectives sont calculées à partir de celles-ci par une différence par rapport à une composante continue et une composante en quadrature respectives d'un courant de référence (Isd_{rif}, Isq_{rif}).

5. Procédé de commande selon la revendication 1, **caractérisé en ce que** lesdits capteurs de position numériques sont des capteurs à effet Hall.

6. Procédé de commande selon l'une quelconque des revendications ci-dessus, **caractérisé en ce que** ledit moteur synchrone est un moteur sans balai.

7. Procédé de commande selon la revendication 6, **caractérisé en ce que** ledit moteur sans balai est un moteur à aimant permanent dont le stator est constitué d'un carter cylindrique creux ayant une pluralité de pièces polaires allongées avec des bobines d'excitation enroulées sur celles-ci, et le rotor comporte un élément magnétique ayant un profil circulaire et des pôles alternés.

8. Procédé de commande selon l'une quelconque des revendications ci-dessus, **caractérisé en ce que** le procédé est utilisé sous un seuil prédéterminé de vitesse angulaire dudit rotor, alors qu'au-dessus dudit seuil, un autre procédé de commande connu comme voulu est utilisé.
